# EUROPÄISCHE PATENTANMELDUNG

(11) **EP 1 065 301 A1**
(43) Veröffentlichungstag der Anmeldung: **03.01.2001**
(21) Anmeldenummer: 99112575.8
(22) Anmeldetag: 01.07.1999
(51) Int. Cl.: D01F 2/00, D01D 5/40, D01F 13/02, B01D 39/18

(54) **Reaktive, faserförmige Cellulosekoagulate**

(71) Anmelder: MELITTA HAUSHALTSPRODUKTE GmbH & Co. Kommanditgesellschaft, D-32427 Minden (DE)
(72) Erfinder: Dölfel, Rainer, Dr., 32457 Porta Westfalica (DE); Schiffer, Werner, Dr., 32425 Minden (DE); Kählke, Joachim, 19294 Heiddorf (DE); Riedel, Bernd, Dr., 07318 Dorfkulm (DE); Taeger, Eberhard, Dr., 07407 Weissbach (DE); Heinemann, Klaus, Dr., 07407 Rudolstadt (DE)
(74) Vertreter: Grünecker, Kinkeldey, Stockmair & Schwanhäusser Anwaltssozietät

(57) **Zusammenfassung**

Die vorliegende Erfindung betrifft reaktive, faserförmige Cellulosekoagulate, ein Verfahren zu deren Herstellung und deren Verwendung sowie Flächengebilde, die diese umfassen. Das erfindungsgemäße Verfahren zur Herstellung der reaktiven, faserförmigen Cellulosekoagulaten umfaßt die Schritte (a) Bereitstellen einer Lösung von Cellulose in einem Gemisch, das Wasser und NMMNO umfaßt, und (b) Behandeln der in Schritt (a) bereitgestellten Lösung in einem Fällbad, das Wasser und NMMNO umfaßt, mit einem Scherfeld. Das erfindungsgemäße Flächengebilde umfaßt ein Substrat und ein erfindungsgemäßes reaktives, faserförmiges Cellulosekoagulat.

## Beschreibung

Die Erfindung betrifft reaktive, faserförmige Cellulosekoagulate, ein Verfahren zu deren Herstellung und deren Verwendung sowie Flächengebilde, die diese umfassen.

Cellulosefasern oder -filme sowie Verfahren zu deren Herstellung sind bekannt.

Die US-PS 5,417,909 beschreibt ein Verfahren zur Herstellung von Cellulosefasern oder -filmen, wobei eine wäßrige Celluloselösung in einem tertiären Amin-N-oxid durch Düsen in ein Medium extrudiert wird, das Cellulose nicht fällt, wie Luft. Die Cellulosemoleküle werden durch einen Scherkraftgradienten in der Düse vororientiert und sodann in dem Medium, das Cellulose nicht fällt, durch Recken orientiert. Die gereckten Cellulosefäden werden dann mit einem Fällbad in Kontakt gebracht, wonach keine weitere Reckung mehr erfolgt. Das Fällbad kann eine verdünnte, wäßrige Aminoxidlösung sein.

Die WO 98/07911 beschreibt ein Verfahren zur Herstellung von Lyocellfasern. Lyocellfasern sind Fasern, die aus Cellulose/N-Methylmorpholin-N-oxid-Lösungen ( im nachstehenden als Cellulose/NMMNO-Lösungen bezeichnet) hergestellt werden. Dazu wird eine Cellulose/NMMNO-Lösung hergestellt und durch Zentrifugalspinnen in Luft gespritzt, wodurch flüssige Fäden gezogen werden. Diese werden dann in ein Fällbad eingeleitet, das aus Wasser, einem niederaliphatischen Alkohol oder Gemischen davon bestehen kann.

Die WO 97/01660 offenbart ein Verfahren zur Herstellung eines Gemisches aus Fasern und Mikrofasern aus Cellulose. Dazu wird eine Lösung aus Cellulose in N-Methylmorpholin-N-oxid (im nachstehenden als NMMNO bezeichnet) hergestellt. Diese wird dann aus einer Düse extrudiert und nach dem melt-blow-Prinzip mit einem starken Luftstrom zerfasert. Das zerfaserte extrudierte Gemisch wird sodann direkt in ein Fällbad, wie Wasser, geblasen.

Bei den vorgenannten Verfahren ist es erforderlich, die Cellulose/NMMNO-Lösung vor dem Fällen in einem die Cellulose nicht fällenden Medium zuerst vorzuspannen, zu orientieren oder zu zerfasern, und diesen Zustand anschließend im Fällbad zu fixieren. Dadurch sind die Verfahren teuer und aufwendig. Außerdem sind bei dem Zentrifugalspinnen bzw. dem melt-blow-Spinnen nur niedrig viskose Lösungen, d.h. wirtschaftlich ungünstige Cellulosekonzentrationen, verarbeitbar.

In der DE-A-196 22 476 ist ein Verfahren zur Herstellung von Mikrofasern aus Cellulose beschrieben. Dabei wird eine Lösung von Cellulose in hydratisierten cyclischen Aminoxiden oder in Gemischen aus hydratisierten cyclischen Aminoxiden und organischen Verdünnungsmitteln einem Desolvatationsmedium zugesetzt und in einem oder mehreren Scherfeldern gleichzeitig und/oder nacheinander zu Mikrofasern verformt. Das Desolvatationsmedium ist eine Lösung eines Polymers oder Polymergemisches in einem Lösungsmittel oder Lösungsmittelgemisch. Lösungsmittel können Dimethylformamid, Dimethylacetamid und N-Methylpyrrolidon sein.

In der DE-A-196 32 540 ist ein weiteres Verfahren zur Herstellung von Mikrofasern aus Cellulose beschrieben. Der Unterschied zu dem in der DE-A-196 22 476 beschriebenen Verfahren besteht darin, daß lösungsmittelfreie Polymere mit Urethan-, Amid- und/oder Harnstoffgruppen als Desolvatationsmedien verwendet werden.

Nachteilig an den beiden vorstehend beschriebenen Verfahren ist es, daß die Desolvatationsmedien teuer sind, die Umwelt belasten und unter Verursachung von Kosten, beispielsweise durch Destillation oder Ultrafeinstfiltration, zurückgewonnen werden müssen. Ein Ersatz dieser Desolvatationsmedien durch umweltverträglichere Fällmittel, wie Wasser oder Alkohol, führt nicht zu reaktiven, faserförmigen Cellulosekoagulaten. Diese Fällmittel sind schnellwirkende Fällmittel und man erhält bei deren Verwendung grobtitrige und nur teilweise faserförmige Produkte.

Aufgabe der vorliegenden Erfindung ist es, ein Verfahren zur Verfügung zu stellen, bei dem Cellulose/NMMNO-Lösungen mit einem hohen Gehalt an Cellulose kostengünstig und wirtschaftlich verarbeitet und gegebenenfalls in Flächengebilde umgesetzt werden können.

Die Lösung ist ein Verfahren zur Herstellung von reaktiven, faserförmigen Cellulosekoagulaten umfassend die Schritte:
(a) Bereitstellen einer Lösung von Cellulose in einem Gemisch, das Wasser und NMMNO umfaßt, und
(b) Behandeln der in Schritt (a) bereitgestellten Lösung in einem Fällbad, das Wasser und NMMNO umfaßt, mit einem Scherfeld.

Das Verfahren hat den Vorteil, daß zur Orientierung der Cellulosemoleküle entlang der Faserachse kein Recken oder Ziehen in Luft oder einem anderen nicht fällenden Medium erforderlich ist. Die Koagulate können direkt in einem Fällbad unter Verwendung eines Scherfelderzeugers erhalten werden. Mit dem erfindungsgemäßen Verfahren können Cellulose/NMMNO-Lösungen mit einem hohen Gehalt an Cellulose verarbeitet werden. Außerdem können damit reaktive Cellulosekoagulate erhalten werden, d.h. amorphe Cellulosekoagulate mit einer hochaktiven, noch nicht durch weitgehend geschlossene innere Wasserstoffbrücken gekennzeichneten Struktur.

Das Bereitstellen einer Lösung von Cellulose in einem Gemisch, das Wasser und NMMNO umfaßt, in Schritt (a) des erfindungsgemäßen Verfahrens, kann in bekannter Weise, wie durch Herstellen der Lösung, durchgeführt werden. Beispielsweise kann eine Cellulose/NMMNO-Lösung durch Kneten einer Mischung von Cellulose, NMMNO und Wasser hergestellt werden. Der Gehalt an Wasser beträgt vorzugsweise 7 bis 16% und an NMMNO 84 bis 93%, bezogen auf das Gemisch aus Wasser und NMMNO.

Die Cellulose kann auch in einem Gemisch aus Wasser und 40 bis 70 Gew.-% NMMNO, bezogen auf das Gemisch aus Wasser und NMMNO, insbesondere 40 bis 65 Gew.-%, dispergiert werden. Sodann wird die erhaltene Dispersion solange unter Kneten einer Vakuumdestillation zur Entfernung von Wasser aus dem Gemisch unterworfen, bis eine Cellulose/NMMNO-Lösung erhalten wird.

Der Gehalt an Cellulose in der in Schritt (a) bereitgestellten Lösung beträgt vorzugsweise 2 bis 16 Gew.-%, bezogen auf das Gesamtgewicht der Lösung. Die Cellulose/NMMNO-Lösung hat vorzugsweise eine Viskosität von 1.000 bis 8.000 Pa•s bei Verarbeitungstemperatur.

In dem erfindungsgemäßen Verfahren wird vorzugsweise Zellstoff mit > 90% α- Cellulose zur Bereitstellung der Lösung in Schritt (a) verwendet.

Die Cellulose/NMMNO-Lösung kann außerdem bis zu 200 Gew.-%, bezogen auf das Gesamtgewicht der Cellulose, mindestens eines zusätzlichen Wirkstoffs enthalten. Bevorzugte Wirkstoffe sind Adsorbenzien, lonentauscher, Farbstoffe, bakterizide oder fungizide Substanzen, elektrisch leitende Materialien, magnetisch wirkende Teilchen oder Aktivkohle. Der Wirkstoff liegt vorzugsweise in Form von Partikeln mit einem Durchmesser von bis zu 300 µm vor. Außerdem kann die Cellulose/NMMNO-Lösung mindestens ein zusätzliches, in NMMNO lösliches Polymer enthalten. Bevorzugte Polymere sind Polysaccharide und deren Derivate.

In Schritt (b) wird die Cellulose/NMMNO-Lösung in einem Fällbad, das Wasser und NMMNO umfaßt, mit einem Scherfeld behandelt. Dadurch wird ein reaktives, faserförmiges Cellulosekoagulat erhalten.

Das Fällbad umfaßt Wasser und NMMNO, wobei vorzugsweise 40 bis 70 Gew.-%, insbesondere 50 bis 65 Gew.-% NMMNO, bezogen auf das Gesamtgewicht des Fällbads, anwesend sind. Allgemein ist der bevorzugte Gehalt an NMMNO in dem Fällbad abhängig von dem Gehalt an Cellulose in der Lösung. Wenn der Gehalt niedrig ist, beispielsweise <10% Cellulose, ist der Gehalt an NMMNO vorzugsweise ebenfalls niedrig, beispielsweise 50 bis 60 Gew.-%. Falls der Gehalt an Cellulose in der Lösung hoch ist, beispielsweise >10% Cellulose, ist der Gehalt an NMMNO in dem Fällbad vorzugsweise hoch, beispielsweise 60 bis 70 Gew.-%, insbesondere 65 Gew.-%.

Schritt (b) wird vorzugsweise bei einer Temperatur von 45 bis 110°C, insbesondere 90 bis 98°C durchgeführt. Wenn Schritt (b) bei einer erhöhten Temperatur durchgeführt wird, ist es bevorzugt, der Cellulose/NMMNO-Lösung zusätzliche Additive zur thermischen und/oder hydrolytischen Stabilisierung zuzugeben, um einen thermischen und/oder hydrolytischen Abbau der Cellulose in der erwärmten Cellulose/NMMNO-Lösung zu vermeiden. Solche Additive sind vorzugsweise Alkalihydroxide.

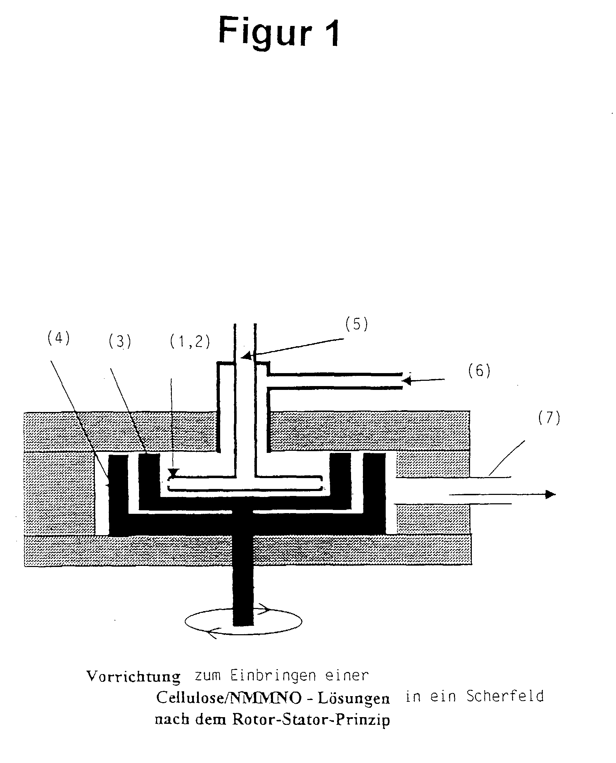

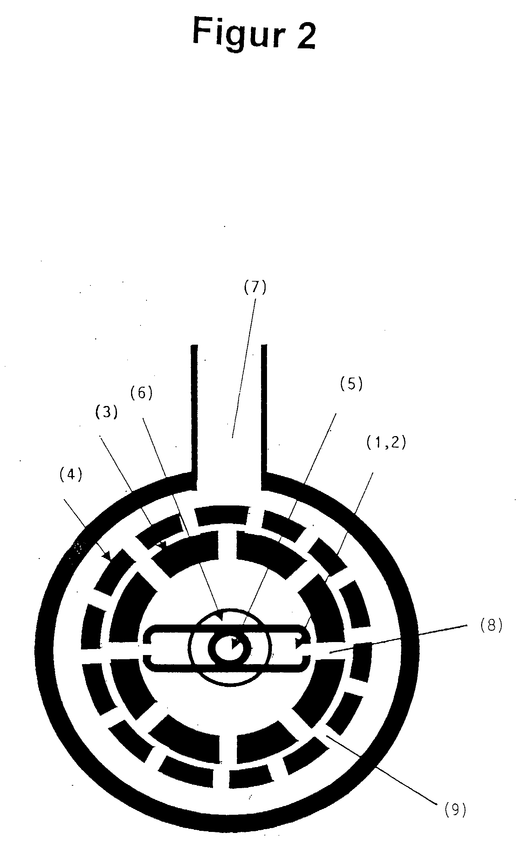

Das Scherfeld kann durch eng beieinander angeordnete, relativ zueinander bewegliche Flächen erzeugt werden. Vorzugsweise wird das Scherfeld mit einer nach dem Rotor-Stator-Prinzip arbeitenden Vorrichtung erzeugt, wie sie nachstehend anhand der Figuren 1 und 2 erläutert oder in der EP-A-0 807 698 dargestellt ist. Die eng beieinander angeordneten, relativ zueinander beweglichen Flächen, mit welchen das Scherfeld erzeugt wird, können durchbrochene oder nicht-durchbrochene Flächen sein. Insbesondere kann das Scherfeld mittels zylinderförmiger, nicht-durchbrochener Kränze, Lochkränzen oder Zahnkränzen oder Kombinationen davon erzeugt werden.

Vorzugsweise kann von der nach Schritt (b) entstandenen Dispersion aus reaktivem, faserförmigen Cellulosekoagulat und Fällbad in einem weiteren Schritt (c) das Fällbad abgetrennt werden. Das Abtrennen kann durch Filtrieren durchgeführt werden, wodurch ein Filterkuchen und ein Filtrat erhalten werden. Der erhaltene Filterkuchen aus reaktivem, faserförmigen Cellulosekoagulat und Rückständen des Fällbads kann gegebenenfalls mit Wasser gewaschen werden, um die Rückstände des Fällbads auszuwaschen. Als Waschwasser kann vorzugsweise das bei der Herstellung der Cellulose/NMMNO-Lösung in Schritt (a) abdestillierte Wasser verwendet werden. Dadurch erhält man eine wäßrige Dispersion aus reaktivem, faserförmigen Cellulosekoagulat und Wasser, wobei das Verhältnis von Cellulosekoagulat und Wasser vorzugsweise etwa 1:10 bis 1:100 ist. Diese Dispersion kann getrocknet werden. Das verwendete Waschwasser, das Wasser und die Rückstände des Fällbads enthält, kann vorzugsweise mit dem nach Schritt (c) erhaltenen Filtrat vereinigt werden.

Das bei der Abtrennung in Schritt (c) erhaltene Filtrat kann entweder als solches oder nach der Zugabe des Waschwassers wiederum in Schritt (b) als Fällbad oder in Schritt (a) zur Herstellung einer Cellulose/NMMNO-Lösung verwendet werden. Wird es in Schritt (a) verwendet, wird zunächst eine Dispersion aus Fällbad und Cellulose hergestellt, bei der sodann der Wassergehalt derart reduziert wird, daß eine Lösung von Cellulose erhalten wird.

Vorzugsweise kann das in Schritt (c) abgetrennte Fällbad in zwei Ströme geteilt werden, von denen einer als Fällbad in Schritt (b) und der andere zur Herstellung der Cellulose/NMMNO-Lösung in Schritt (a) verwendet wird. Das Gewichtsverhältnis der beiden Ströme zueinander beträgt vorzugsweise etwa 6:1 bis 60:1.

Dadurch ist es möglich, den Verbrauch an Fällbad bzw. Lösungsmittel und den Verbrauch an Wasser in dem erfindungsgemäßen Verfahren gering zu halten, wodurch es kostengünstig und umweltverträglich wird.

Mit dem erfindungsgemäßen Verfahren werden reaktive, faserförmige Cellulosekoagulate erhalten. Diese haben eine amorphe Struktur. Die Cellulosekoagulate enthalten sehr viele, noch nicht durch Wasserstoffbrückenbindungen deaktivierte, freie OH-Gruppen. Dadurch sind die Koagulate reaktiv und können beispielsweise bei einer flächigen Ablegung an den Kreuzpunkten zu einem zusammenhängenden Film durch Ausbildung von Wasserstoffbrückenbindungen zwischen den Koagulaten verbunden werden.

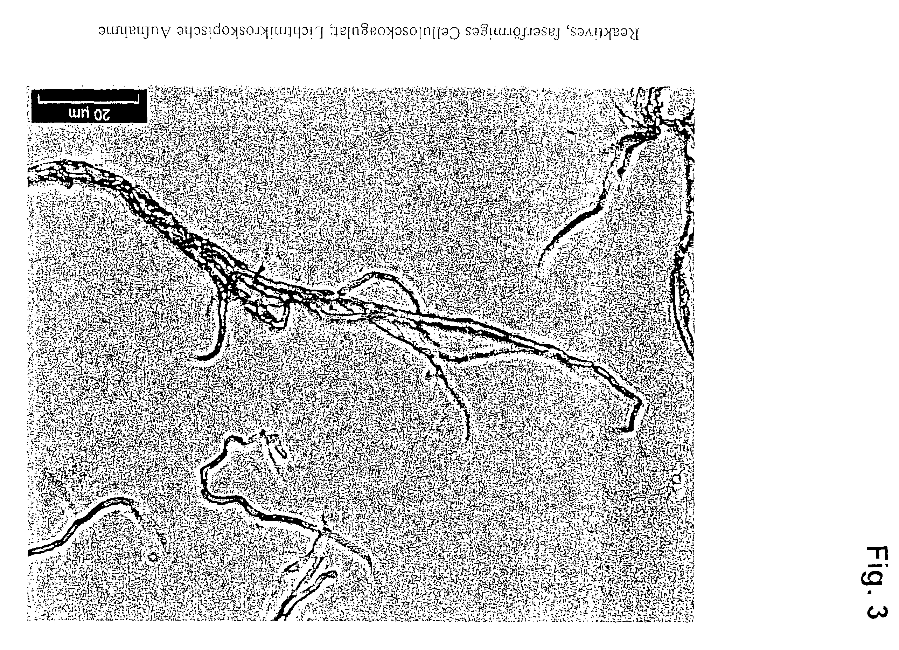

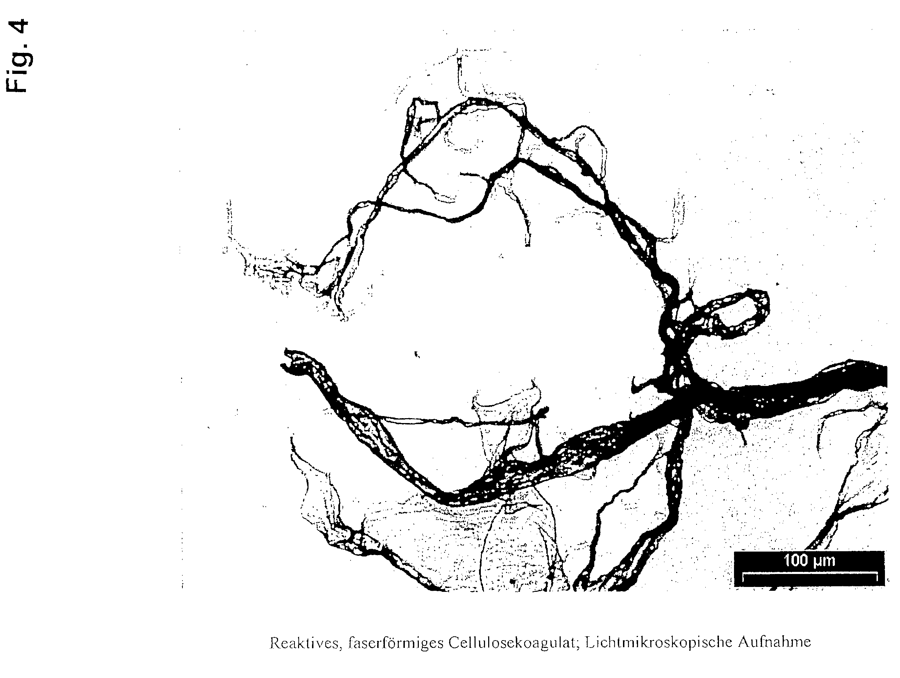

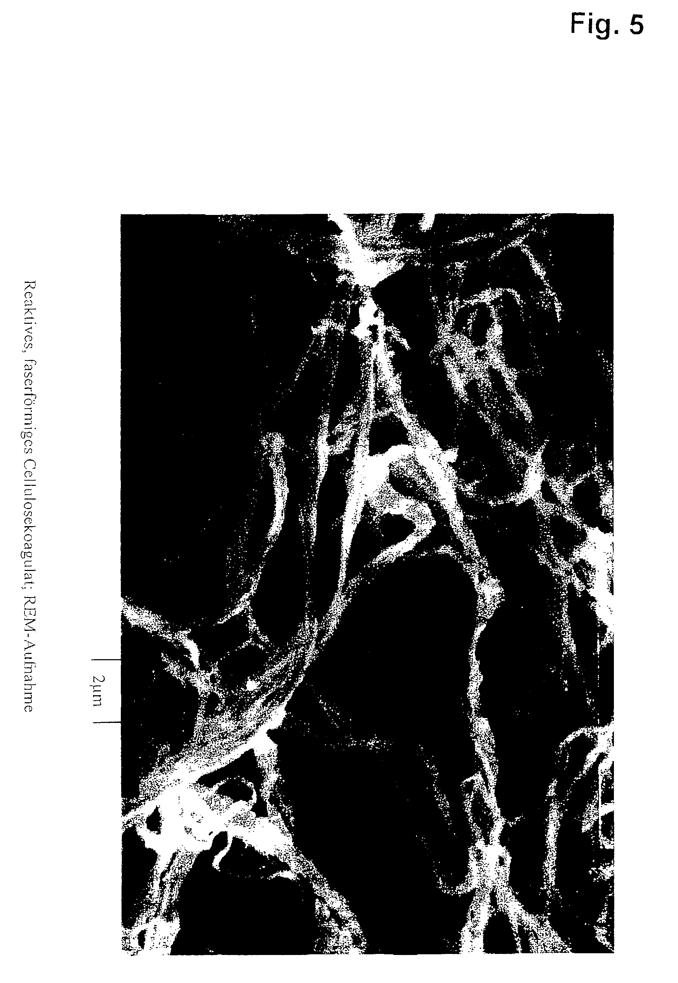

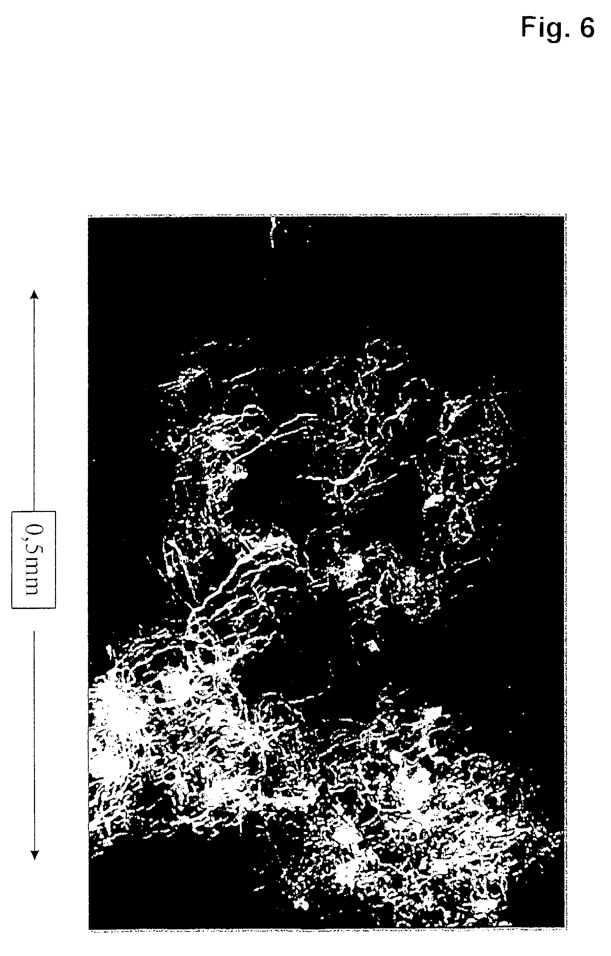

Beispiele für erfindungsgemäße Koagulate sind in den Figuren 3 bis 6 gezeigt. Die erfindungsgemäßen Koagulate können einen Durchmesser von 0,1 bis 200 µm, bevorzugt 1 bis 10 µm haben. Das Verhältnis der Länge zu dem Durchmesser der Koagulate beträgt vorzugsweise 1:10 bis 1: 1000. Die erfindungsgemäßen Koagulate sind vorzugsweise Mikrokoagulate, d.h. solche superfeinen Koagulate, deren Durchmesser bis zu 10 µm beträgt.

Gegebenenfalls können die mit Wasser gewaschenen erfindungsgemäßen Cellulosekoagulate zu einer hochviskosen wäßrigen Paste mit einem Gehalt an reaktiven, faserförmigen Cellulosekoagulaten von vorzugsweise 3 bis 10 Gew.-% umgewandelt werden, was die spätere Weiterverarbeitung in Naßprozessen erleichtert.

Eine Vorrichtung zum Durchführen des erfindungsgemäßen Verfahrens wird nachstehend in Verbindung mit den Figuren 1 und 2 beschrieben, wobei Figur 1 einen schematischen Vertikalschnitt und Figur 2 einen schematischen Horizontalschnitt durch die Vorrichtung darstellt. Die Vorrichtung hat einen Zulauf 5 für die Cellulose/NMMNO-Lösung, der in zwei Düsen 1,2 ausläuft. Außerdem weist sie zwei Lochkränze 3,4 auf, von denen einer Bestandteil eines Rotors 3 und der andere Bestandteil eines Stators 4 ist. Diese Lochkränze weisen Durchbrechungen 8,9 auf. Ein Zulauf 6 dient zum Einfüllen des Fällbads. Der Zulauf 6 umschließt den Zulauf 5. Die Düsen 1,2 sind im Inneren des Lochkranzes 3 angeordnet und radial nach außen auf die Innenwand des Lochkranzes ausgerichtet. Die Vorrichtung hat schließlich einen Ablauf 7.

Im Betrieb wird die Cellulose/NMMNO-Lösung über den Zulauf 5 zu den Düsen 1,2 eingeleitet. Das Fällbad wird vorher über den Zulauf 6 eingefüllt, so daß es den Raum im Stator und Rotor ausfüllt. Die Cellulose/NMMNO-Lösung wird durch die Düsen 1,2 in das Fällbad gespritzt, und gelangt durch die Durchbrechungen in den Spalt zwischen Rotor 3 und Stator 4, wo sie infolge der Relativbewegung der benachbarten Flächen einer intensiven Scherwirkung ausgesetzt und durch das Fällbad gefällt wird. Dadurch werden erfindungsgemäße reaktive, faserförmige Cellulosekoagulate erhalten.

Die erfindungsgemäßen reaktiven, faserförmigen Cellulosekoagulate können bei der Herstellung von Flächengebilden verwendet werden. Ein solches Flächengebilde umfaßt somit ein erfindungsgemäßes reaktives, faserförmiges Cellulosekoagulat.

In einer Ausführungsform ist das erfindungsgemäße reaktive, faserförmige Cellulosekoagulat gleichmäßig in dem Flächengebilde verteilt. Solche erfindungsgemäßen Flächengebilde können beispielsweise durch Zugabe eines reaktiven, faserförmigen Cellulosekoagulats bei der Papier- oder Naßvlies-Herstellung sowie der Herstellung von spun-laced-Vliesstoffen erhalten werden.

In einer anderen Ausführungsform ist das erfindungsgemäße reaktive, faserförmige Cellulosekoagulat auf ein Substrat aufgebracht. Dadurch können Flächengebilde erhalten werden, bei denen das erfindungsgemäße reaktive, faserförmige Cellulosekoagulat auf mindestens einer der Seiten des Substrats anwesend ist. Bevorzugte Substrate sind Papier, Naßvlies, Airlaid-Material, Textilien, Fasern auf Kunststoffbasis, biologisch abbaubare Stoffe, Vliesstoffe, Cellulose oder Gemische davon.

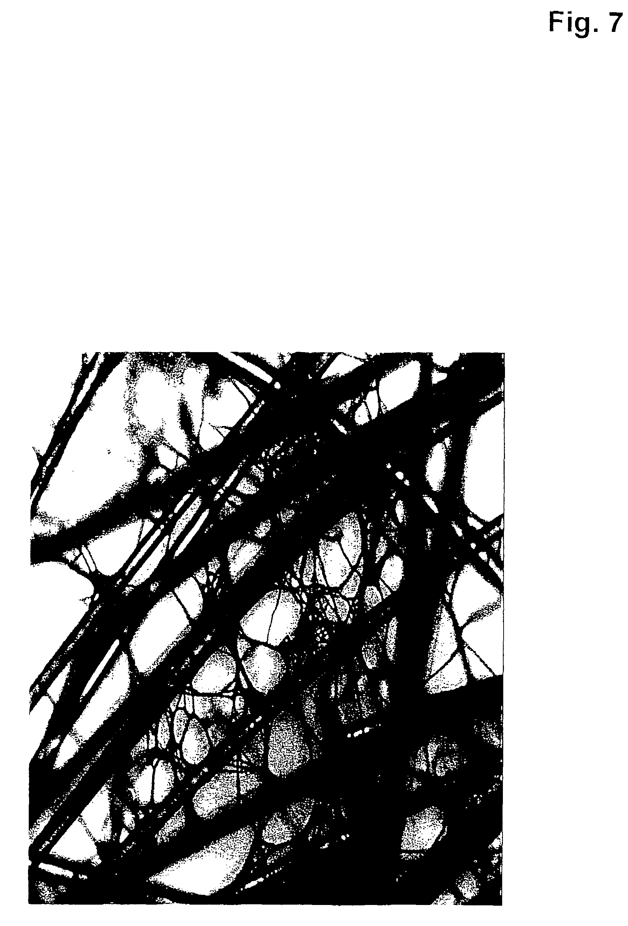

Wenn als Flächengebilde oder Substrat Viskosefasern, Cellulosefasern oder andere natürliche Fasern verwendet werden, wird ein erfindungsgemäßes Flächengebilde erhalten, das vollständig bioabbaubar bzw. kompostierbar ist. Es können auch Substrate mit Fasern auf Kunststoffbasis verwendet werden. Figur 7 zeigt ein erfindungsgemäßes Flächengebilde.

Die Menge an zugesetztem reaktiven, faserförmigen Cellulosekoagulat beträgt vorzugsweise, bezogen auf das Gesamtgewicht des Flächengebildes, 0,5 Gew.-% bis 60 Gew.-%. Wird eine höhere Menge zugesetzt, kann die Entwässerung einer Papier- oder Naßvliesbahn auf der Produktionsanlage erschwert werden. Das reaktive, faserförmige Cellulosekoagulat würde in diesem Fall fast sämtliche Poren des Papiers oder Naßvlieses zusetzen, wodurch die Luftdurchlässigkeit und Partikelabscheideleistung nicht mehr in ausreichendem Maße gegeben sind.

Erfindungsgemäße Flächengebilde, bei denen das erfindungsgemäße reaktive, faserförmige Cellulosekoagulat auf mindestens einer der Seiten des Substrats anwesend ist können dadurch hergestellt werden, daß eine wäßrige Aufschlämmung der erfindungsgemäßen reaktiven, faserförmigen Cellulosekoagulate auf eine oder beide Seiten eines Substrats aufgebracht wird. Der Gehalt an reaktiven, faserförmigen Cellulosekoagulat in der Aufschlämmung beträgt vorzugsweise 0,01 bis 10 Gew.-%, bezogen auf das Gesamtgewicht der Aufschlämmung. Vorzugsweise wird als Aufschlämmung die wäßrige Dispersion verwendet, die, wie vorstehend beschrieben, durch Waschen des nach Schritt (c) erhaltenen Filterkuchens mit Wasser erhalten wird. Die Aufschlämmung kann vorzugsweise mittels Sprühaggregaten aufgebracht werden. Nach dem Aufbringen der Aufschlämmung auf das Substrat wird das Flächengebilde getrocknet. Man erhält dadurch ein Flächengebilde mit einer ausgezeichneten Filterleistung, das eine höhere mechanische Festigkeit als ein vergleichbares Flächengebilde aus melt blow-Vliesstoff, wie in der DE-A-4443158 beschrieben, hat.

Außerdem kann das reaktive, faserförmige Cellulosekoagulat auch in Form einer Suspension mittels herkömmlicher Beschichtungs- oder Imprägnierverfahren aufgetragen werden.

Das erfindungsgemäße Flächengebilde kann zusätzlich Bindemittel umfassen, wie sie in Art und Menge dem Stand der Technik entsprechen. Die erfindungsgemäßen Flächengebilde können als Filter, Reinigungstücher, Staubfilter oder in Kombination mit bereits bekannten Materialien für vielfältige Anwendungen eingesetzt werden.

Nachstehend wird die Erfindung anhand eines Beispiels erläutert.

In einem beheizbaren 5-Liter Rührkessel werden 0,11 kg Zellstoff mit einem durchschnittlichen Polymerisationsgrad (DP) von 486 und einem Gehalt von 93% α-Cellulose zusammen mit 2,352 kg einer 54%igen N-Methylmorpholin-N-oxid Lösung angemaischt auf 85°C erwärmt und daraus unter langsamen Absenken des Drucks innerhalb von 3 Stunden 0,886 kg Wasser abdestilliert. Man erhält 1,576 kg einer klaren Cellulose/NMMNO-Lösung. Diese 85°C heiße Cellulose/NMMNO-Lösung wird mit einer Fördermenge von 30 g/min. zusammen mit 370 g/min. 15,760 kg einer 92°C heißen 54%igen wäßrigen NMMNO-Lösung in getrennten Leitungen einem 20.000 U/min. laufendem Ultraturrax UTR IL-F/Mischkammer DK 25,11 zugeführt, verformt und die entstandenen feintitrigen faserförmigen Produkte koaguliert. Man erhält insgesamt 17,36 kg einer ca. 0,56%igen Cellulosekoagulatdispersion aus dem Scherfelderzeuger. Auf einem Drahtsieb mit 1.500 Ma/cm² wird die Dispersion mit ca. 80 mbar Unterdruck abfiltriert und der zurückbleibende Filterkuchen mit 1,786 kg Wasser in mehreren Schritten NMMNO-frei gewaschen. Der entstandene Filterkuchen enthält 0,1 kg reaktives, faserförmiges Cellulosekoagulat und ca. 0,9 kg Wasser. Beim Trocknen an der Luft erhält man eine harte, nicht redispergierbare, durchscheinende Folie. Das Waschwasser und das bei der Filtration der Dispersion erhaltene Filtrat werden vereinigt. Dadurch erhält man 18,122 kg eines Gemisches, von dem 2,352 kg erneut zur Herstellung einer Cellulose/NMMNO-Lösung und 15,76 kg als Fällbad bei einem weiteren Herstellungsverfahren verwendet werden. Die durch die 93%ige α-Cellulose eingetragenen ca. 0,01 kg nicht α-cellulosische Bestandteile, die sich im vereinigten Filtrat befinden, werden durch eine Filtration mit anschließendem lonenaustauscherdurchlauf aus dem Kreislauf entfernt.

## Patentansprüche

1. Verfahren zur Herstellung von reaktiven, faserförmigen Cellulosekoagulaten umfassend die Schritte
(a) Bereitstellen einer Lösung von Cellulose in einem Gemisch, das Wasser und NMMNO umfaßt, und
(b) Behandeln der in Schritt (a) bereitgestellten Lösung in einem Fällbad, das Wasser und NMMNO umfaßt, mit einem Scherfeld.

2. Verfahren nach Anspruch 1, wobei in einem weiteren Schritt (c) von der in Schritt (b) entstandenen Dispersion aus reaktivem, faserförmigen Cellulosekoagulat und Fällbad das Fällbad abgetrennt wird.

3. Verfahren nach Anspruch 2, wobei das nach dem Abtrennen des Fällbads in Schritt (c) erhaltene reaktive, faserförmige Cellulosekoagulat mit Wasser gewaschen wird.

4. Verfahren nach Anspruch 3, wobei das verwendete Wasser mit dem nach Schritt (c) erhaltenen Filtrat vereinigt wird.

5. Verfahren nach einem der Ansprüche 2 bis 4, wobei das in Schritt (c) abgetrennte Fällbad als solches oder nach Zugabe des verwendeten Wassers zur Herstellung der Lösung von Cellulose in Schritt (a) und/oder als Fällbad in Schritt (b) verwendet wird.

6. Verfahren nach einem der vorstehenden Ansprüche, wobei die Lösung von Cellulose in Schritt (a) dadurch bereitgestellt wird, daß Cellulose in ein Gemisch, das Wasser und 40 bis 70 Gew.-% NMMNO, bezogen auf des Gesamtgewicht des Gemisches, umfaßt, eingebracht und anschließend der Gehalt an NMMNO im Gemisch derart erhöht wird, daß eine Lösung von Cellulose erhalten wird.

7. Verfahren nach einem der vorstehenden Ansprüche, wobei die in Schritt (a) bereitgestellte Lösung von Cellulose eine Viskosität von etwa 1000 bis 8000 Pa•s bei Verarbeitungstemperatur beträgt.

8. Verfahren nach einem der vorstehenden Ansprüche, wobei die in Schritt (a) bereitgestellte Lösung von Cellulose zusätzliche Additive zur thermischen und/oder hydrolytischen Stabilisierung umfaßt.

9. Verfahren nach einem der vorstehenden Ansprüche, wobei die in Schritt (a) bereitgestellte Lösung von Cellulose mindestens einen zusätzlichen Wirkstoff in Form von Partikeln mit einem Durchmesser von bis zu 300 µm und einer Menge von bis zu 200 Gew.-%, bezogen auf das Gesamtgewicht der Cellulose, enthält.

10. Verfahren nach einem der vorstehenden Ansprüche, wobei die in Schritt (a) bereitgestellte Lösung von Cellulose mindestens ein zusätzliches, in NMMNO lösliches Polymer enthält dessen Menge bis zu 200 Gew.-%, bezogen auf das Gesamtgewicht der Cellulose, beträgt.

11. Verfahren nach einem der vorstehenden Ansprüche, wobei das Scherfeld in Schritt (b) durch eng beieinander angeordnete, relative zueinander bewegliche Flächen erzeugt wird.

12. Verfahren nach einem der vorstehenden Ansprüche, wobei das Fällbad in Schritt (b) ein Gemisch aus Wasser und 40 bis 70 Gew.-% NMMNO, bezogen auf des Gesamtgewicht des Gemisches, umfaßt.

13. Verfahren nach einem der vorstehenden Ansprüche, wobei Schritt (b) bei etwa 45 bis 110 °C durchgeführt wird.

14. Reaktives, faserförmiges Cellulosekoagulat, erhältlich durch ein Verfahren nach einem der vorstehenden Ansprüche.

15. Reaktives, faserförmiges Cellulosekoagulat nach Anspruch 14, wobei der Durchmesser des Koagulats etwa 0,1 bis etwa 200 µm beträgt.

16. Verwendung des reaktiven, faserförmigen Cellulosekoagulats nach Anspruch 14 oder 15 bei der Herstellung von Flächengebilden.

17. Flächengebilde, das ein reaktives, faserförmiges Cellulosekoagulat nach Anspruch 14 oder 15 umfaßt.

18. Flächengebilde nach Anspruch 17, wobei das reaktive, faserförmige Cellulosekoagulat gleichmäßig in dem Flächengebilde verteilt ist.

19. Flächengebilde nach Anspruch 17, wobei das reaktive, faserförmige Cellulosekoagulat auf ein Substrat aufgebracht ist, das ausgewählt ist aus der Gruppe bestehend aus Papier, Naßvlies, Airlaid-Material, Textilien, Fasern auf Kunststoffbasis, biologisch abbaubaren Stoffen, Cellulose, Vliesstoff oder Gemischen davon.

20. Flächengebilde nach Anspruch 17 und 19, wobei das reaktive, faserförmige Cellulosekoagulat auf mindestens einer der Seiten des Substrats anwesend ist.

21. Flächengebilde nach Anspruch 17 bis 20, wobei zusätzlich Bindemittel anwesend ist.

22. Flächengebilde nach Anspruch 17 bis 21, wobei 0,5 Gew.-% bis 60 Gew.-% reaktives, faserförmiges Cellulosekoagulat, bezogen auf das Gesamtgewicht des Flächengebildes, anwesend sind.

23. Flächengebilde nach Anspruch 17 bis 22, wobei das Flächengebilde ein Filter, ein Reinigungstuch oder ein Staubfilter ist.

24. Verfahren zur Herstellung eines Flächengebildes nach Anspruch 20, wobei ein reaktives, faserförmiges Cellulosekoagulat nach einem der Ansprüche 14 oder 15 bei der Papier-, Naßvlies-Herstellung oder Spunlaced Vliesstofferzeugung zugegeben wird.

25. Verfahren zur Herstellung eines Flächengebildes nach einem der Ansprüche 21 bis 23, wobei eine Aufschlämmung aus reaktivem, faserförmigen Cellulosekoagulat nach einem der Ansprüche 14 oder 15 und Wasser auf mindestens eine der Seiten des Substrats aufgebracht wird.

26. Verfahren nach Anspruch 25, wobei die Aufschlämmung mittels Sprühaggregaten aufgebracht wird.
